# EUROPEAN PATENT APPLICATION

(11) **EP 3 279 158 A1**
(43) Date of publication of application: **07.02.2018**
(21) Application number: 16772575.3
(22) Date of filing: 24.03.2016
(51) Int. Cl.: C03C 27/12, B60J 1/00

(54) **INTERLAYER FOR LAMINATED GLASS AND LAMINATED GLASS**

(30) Priority: 31.03.2015 JP 2015074433
(71) Applicant: Sekisui Chemical Co., Ltd., Osaka-shi, Osaka 530-8565 (JP)
(72) Inventor: OOHIGASHI, Yuji, Mishima-gun Osaka 618-0021 (JP); MIKAYAMA, Kaoru, Mishima-gun Osaka 618-0021 (JP)
(74) Representative: Ter Meer Steinmeister & Partner
(86) International application number: PCT/JP2016/059473
(87) International publication number: WO 2016/158694

(57) **Abstract**

There is provided an interlayer film for laminated glass with which the flexural rigidity of laminated glass can be enhanced and the sound insulating properties of laminated glass can be enhanced. The interlayer film for laminated glass according to the present invention includes a thermoplastic resin, and has a smallest value of the shear storage elastic modulus in a temperature region of 10°C or more and 40°C or less measured at a frequency of 0.5 Hz of 3 MPa or more, a ratio of a shear storage elastic modulus at 20°C measured at a frequency of 0.5 Hz to a shear storage elastic modulus at -30°C measured at a frequency of 0.5 Hz of 0.01 or more and 0.8 or less, a glass transition temperature falling within the range of - 20°C or more and 0°C or less, and a largest value of tan δ in a temperature region of -20°C or more and 0°C or less of 0.1 or more.

## Description

### TECHNICAL FIELD

The present invention relates to an interlayer film for laminated glass which is used for obtaining laminated glass. Moreover, the present invention relates to laminated glass prepared with the interlayer film for laminated glass.

### BACKGROUND ART

Since laminated glass generates only a small amount of scattering glass fragments even when subjected to external impact and broken, laminated glass is excellent in safety. As such, the laminated glass is widely used for automobiles, railway vehicles, aircraft, ships, buildings and the like. The laminated glass is produced by sandwiching an interlayer film for laminated glass between two glass plates.

Examples of the interlayer film for laminated glass include a single-layered interlayer film having a one-layer structure and a multi-layered interlayer film having a two or more-layer structure.

As an example of the interlayer film for laminated glass, the following Patent Document 1 discloses a sound insulating layer including 100 parts by weight of a polyvinyl acetal resin with an acetalization degree of 60 to 85% by mole, 0.001 to 1.0 part by weight of at least one kind of metal salt among an alkali metal salt and an alkaline earth metal salt, and a plasticizer in an amount greater than 30 parts by weight. This sound insulating layer can be used alone as a single-layered interlayer film.

Furthermore, the following Patent Document 1 also describes a multi-layered interlayer film in which the sound insulating layer and another layer are layered. Another layer to be layered with the sound insulating layer includes 100 parts by weight of a polyvinyl acetal resin with an acetalization degree of 60 to 85% by mole, 0.001 to 1.0 part by weight of at least one kind of metal salt among an alkali metal salt and an alkaline earth metal salt, and a plasticizer in an amount of 30 parts by weight or less.

The following Patent Document 2 discloses an interlayer film which is constituted of a polymer layer having a glass transition temperature of 33°C or higher. In Patent Document 2, a technique of arranging the polymer layer between glass plates with a thickness of 4.0 mm or less is described.

The following Patent Document 3 discloses an interlayer film including a polyvinyl acetal (A), at least one kind of plasticizer (B), fumed silica (C) and at least one kind of basic compound (D). In this interlayer film, the difference in refractive index between the fumed silica (C) and a plasticized polyvinyl acetal (A+B) is 0.015 or less, and the weight ratio C/(A+B) is 2.7/100 to 60/100.

### Related Art Document

### Patent Document

Patent Document 1: JP 2007-070200 A
Patent Document 2: US 2013/0236711 A1
Patent Document 3: WO 2008/122608 A1

### SUMMARY OF THE INVENTION

### PROBLEMS TO BE SOLVED BY THE INVENTION

With regard to laminated glass prepared with such a conventional interlayer film described in Patent Documents 1 to 3, there are cases where the laminated glass is low in flexural rigidity. As such, for example, when the laminated glass is used as window glass and used for a side door of an automobile, the side door sometimes does not have a frame for fixing the laminated glass to cause troubles in opening/closing of the window glass due to the deflection attributed to the low rigidity of the laminated glass.

Moreover, in recent years, for the purpose of attaining reduced weight of laminated glass, a technique for making the thickness of a glass plate thin has been desired. In laminated glass prepared with an interlayer film sandwiched between two glass plates, when the thickness of the glass plate is thinned, there is a problem that maintaining the flexural rigidity sufficiently high is extremely difficult.

For example, laminated glass can be reduced in weight as long as the rigidity of laminated glass, even with the thin glass plates, can be enhanced by virtue of the interlayer film. When laminated glass is light in weight, the amount of the material used for the laminated glass can be decreased to reduce the environmental load. Furthermore, when laminated glass being light in weight is used for an automobile, the fuel consumption can be improved, and as a result, the environmental load can be reduced.

In this connection, in Patent Document 3, it has been described that dynamic characteristics such as tensile strength are improved. However, in general, tensile strength and flexural rigidity are different from each other. Even if the tensile strength can be enhanced to some extent, there are cases where the flexural rigidity fails to be sufficiently enhanced.

Moreover, in laminated glass prepared with an interlayer film, in addition to being high in flexural rigidity, being also high in sound insulating properties is desired. In Patent Document 3, even if the tensile strength can be enhanced, the sound insulating properties fail to become sufficiently high. In particular, there is no suggestion about a problem that the flexural rigidity of laminated glass is insufficient when a glass plate thinned in thickness and an interlayer film provided with a sound insulating layer having a low glass transition temperature are combined.

An object of the present invention is to provide an interlayer film for laminated glass with which the flexural rigidity of laminated glass can be enhanced and the sound insulating properties of laminated glass can be enhanced. Moreover, the present invention is also aimed at providing laminated glass prepared with the interlayer film for laminated glass.

### MEANS FOR SOLVING THE PROBLEMS

According to a broad aspect of the present invention, there is provided an interlayer film for laminated glass (hereinafter, sometimes described as an interlayer film) being a single-layered interlayer film for laminated glass, including a thermoplastic resin, and having a smallest value of the shear storage elastic modulus in a temperature region of 10°C or more and 40°C or less measured at a frequency of 0.5 Hz of 3 MPa or more, a ratio of a shear storage elastic modulus at 20°C measured at a frequency of 0.5 Hz to a shear storage elastic modulus at -30°C measured at a frequency of 0.5 Hz of 0.01 or more and 0.8 or less, a glass transition temperature falling within the range of -20°C or more and 0°C or less, and a largest value of tan δ in a temperature region of -20°C or more and 0°C or less of 0.1 or more.

It is preferred that the thermoplastic resin contain a polyvinyl acetal resin. It is preferred that the content of the polyvinyl acetal resin be 20% by weight or more in 100% by weight of the whole thermoplastic resin. It is preferred that the polyvinyl acetal resin be a polyvinyl acetoacetal resin or a polyvinyl butyral resin.

In a specific aspect of the interlayer film according to the present invention, the largest value of the shear storage elastic modulus in a temperature region of 10°C or more and 40°C or less measured at a frequency of 0.5 Hz is 500 MPa or less.

It is also preferred that the thermoplastic resin contain a thermoplastic resin other than the polyvinyl acetal resin. It is preferred that the content of the thermoplastic resin other than the polyvinyl acetal resin be 15% by weight or more in 100% by weight of the whole thermoplastic resin. It is preferred that the thermoplastic resin other than the thermoplastic resin be an acrylic polymer.

In a specific aspect of the interlayer film according to the present invention, the thickness thereof is 3 mm or less.

In a specific aspect of the interlayer film according to the present invention, the interlayer film is used together with a first glass plate having a thickness of 1.6 mm or less and is arranged between the first glass plate and a second glass plate and being used for obtaining laminated glass.

In a specific aspect of the interlayer film according to the present invention, the interlayer film is arranged between a first glass plate and a second glass plate and being used for obtaining laminated glass, and the sum of the thickness of the first glass plate and the thickness of the second glass plate is 3.5 mm or less.

According to a broad aspect of the present invention, there is provided laminated glass including a first lamination glass member, a second lamination glass member and the interlayer film for laminated glass described above, the interlayer film for laminated glass being arranged between the first lamination glass member and the second lamination glass member.

In a specific aspect of the laminated glass according to the present invention, the first lamination glass member is a first glass plate, and the thickness of the first glass plate is 1.6 mm or less.

In a specific aspect of the laminated glass according to the present invention, the first lamination glass member is a first glass plate, the second lamination glass member is a second glass plate, and the sum of the thickness of the first glass plate and the thickness of the second glass plate is 3.5 mm or less.

### EFFECT OF THE INVENTION

Since the interlayer film for laminated glass according to the present invention is a single-layered interlayer film for laminated glass, the smallest value of the shear storage elastic modulus in a temperature region of 10°C or more and 40°C or less measured at a frequency of 0.5 Hz is 3 MPa or more, the ratio of a shear storage elastic modulus at 20°C measured at a frequency of 0.5 Hz to a shear storage elastic modulus at -30°C measured at a frequency of 0.5 Hz is 0.01 or more and 0.8 or less, the glass transition temperature falls within the range of -20°C or more and 0°C or less, and the largest value of tan δ in a temperature region of -20°C or more and 0°C or less is 0.1 or more, the flexural rigidity of laminated glass prepared with the interlayer film can be enhanced and the sound insulating properties of the laminated glass can be enhanced.

### BRIEF DESCRIPTION OF DRAWINGS

[Fig. 1] Fig. 1 is a sectional view schematically showing an example of laminated glass prepared with the interlayer film for laminated glass in accordance with one embodiment of the present invention.
[Fig. 2] Fig. 2 is a schematic view for illustrating a measurement method for the flexural rigidity.

### MODE(S) FOR CARRYING OUT THE INVENTION

Hereinafter, the present invention will be described in detail.

An interlayer film for laminated glass (hereinafter, sometimes described as an interlayer film) according to the present invention is a single-layered interlayer film for laminated glass. The interlayer film according to the present invention is measured for the shear storage elastic modulus in a temperature region of 10°C or more and 40°C or less (G' (10 to 40°C)) at a frequency of 0.5 Hz. In the interlayer film according to the present invention, the smallest value of the shear storage elastic modulus in a temperature region of 10°C or more and 40°C or less (G' (10 to 40°C)) measured at a frequency of 0.5 Hz is 3 MPa or more.

Furthermore, in the interlayer film according to the present invention, the ratio (G' (20°C)/G' (-30°C)) of a shear storage elastic modulus at 20°C (G' (20°C)) measured at a frequency of 0.5 Hz to a shear storage elastic modulus at - 30°C (G' (-30°C)) measured at a frequency of 0.5 Hz is 0.01 or more and 0.8 or less.

Furthermore, in the interlayer film according to the present invention, the glass transition temperature falls within the range of -20°C or more and 0°C or less, and the largest value of tan δ in a temperature region of -20°C or more and 0°C or less is 0.1 or more.

Since the interlayer film according to the present invention is provided with the above-mentioned configuration, the flexural rigidity of laminated glass prepared with the interlayer film can be enhanced. Moreover, for obtaining laminated glass, there are many cases in which the interlayer film is arranged between a first glass plate and a second glass plate. Even when the thickness of a first glass plate is thinned, by the use of the interlayer film according to the present invention, the flexural rigidity of laminated glass can be sufficiently enhanced. Moreover, even when the thicknesses of both a first glass plate and a second glass plate are thinned, by the use of the interlayer film according to the present invention, the flexural rigidity of laminated glass can be sufficiently enhanced. In this connection, when the thicknesses of both a first glass plate and a second glass plate are thickened, the flexural rigidity of laminated glass is further enhanced.

Moreover, in a conventional interlayer film, it is difficult to sufficiently enhance the flexural rigidity over a wide temperature range including high temperatures and low temperatures. For example, there are a case where the flexural rigidity at a high temperature is high and the flexural rigidity at a low temperature is low and a case where the flexural rigidity at a low temperature is high and the flexural rigidity at a high temperature is low. In contrast, in the present invention, over a wide temperature range (for example, at 23°C and 40°C), the flexural rigidity can be enhanced.

Furthermore, since the interlayer film according to the present invention is provided with the above-mentioned configuration, the sound insulating properties of laminated glass prepared with the interlayer film can be enhanced. In the present invention, the sound insulating properties at a sound frequency of about 3,000 Hz can be enhanced and the sound insulating properties at a sound frequency of about 4,000 Hz can also be enhanced.

In the present invention, the interlayer film is not a multi-layered interlayer film but a single-layered interlayer film, and both of the flexural rigidity and the sound insulating properties of the single-layered interlayer film can be effectively enhanced.

Incidentally, for the purpose of obtaining an interlayer film, a recovered material which has been used at least one time for obtaining an interlayer film (a recovered interlayer film) is sometimes reused. Examples of the recovered material which has been used at least one time for obtaining an interlayer film (the recovered interlayer film) include unwanted portions (selvage portion) at both ends of an interlayer film which are generated in a production process of the interlayer film, unwanted portions (trimmings) at the periphery of an interlayer film which are generated in a production process of laminated glass, an interlayer film for laminated glass obtained by separating and removing glass plates from a defective product of laminated glass generated in a production process of laminated glass, an interlayer film obtained by separating and removing glass plates from laminated glass obtained by disassembling a used vehicle and a decrepit building, and the like. In this connection, an interlayer film which is generated in a production process of the interlayer film and becomes unnecessary also corresponds to a recovered material which has been used at least one time for obtaining an interlayer film.

Since the interlayer film according to the present invention is a single-layered interlayer film, the interlayer film material can be reused and the recyclability can be enhanced. Physical properties of interlayer films before and after recycling can be made equivalent to each other to be exhibited.

The shear storage elastic modulus is measured in the following manner.

The shear storage elastic modulus is measured by means of a dynamic viscoelasticity measuring apparatus "DMA+1000" available from Metravib. It is preferred that the interlayer film be cut into a size of 50 mm in length by 20 mm in width, and using the shear mode, the measurement be performed under the condition in which the temperature is increased from - 50°C to 200°C at a temperature increasing rate of 2°C/minute and under the condition of a frequency of 0.5 Hz and a strain of 0.05%.

The smallest value of the shear storage elastic modulus (G' (10 to 40°C)) is 3 MPa or more, preferably 5 MPa or more and more preferably 10 MPa or more. When the smallest value thereof is the above lower limit or more, the flexural rigidity is effectively enhanced.

The largest value of the shear storage elastic modulus in a temperature region of 10°C or more and 40°C or less (G' (10 to 40°C)) measured at a frequency of 0.5 Hz is preferably 700 MPa or less, more preferably 500 MPa or less, further preferably 450 MPa or less and especially preferably 400 MPa or less. When the largest value thereof is the above upper limit or less, the sound insulating properties are further improved.

The ratio (G' (20°C)/G' (-30°C)) is 0.01 or more, preferably 0.015 or more and more preferably 0.02 or more. When the ratio is the above lower limit or more, the flexural rigidity and the sound insulating properties are effectively enhanced.

The ratio (G' (20°C)/G' (-30°C)) is preferably 0.8 or less, more preferably 0.7 or less, further preferably 0.6 or less and especially preferably 0.5 or less. When the ratio is the above upper limit or less, the sound insulating properties are improved.

It is preferred that each of a first surface and a second surface of the interlayer film be a surface on which a lamination glass member or a glass plate is layered.

The interlayer film is arranged between a first glass plate and a second glass plate to be suitably used for obtaining laminated glass. Since the flexural rigidity can be sufficiently enhanced by virtue of the interlayer film, the sum of the thickness of the first glass plate and the thickness of the second glass plate is preferably 3.5 mm or less and more preferably 3 mm or less. The interlayer film is arranged between a first glass plate and a second glass plate to be suitably used for obtaining laminated glass. Since the flexural rigidity can be sufficiently enhanced by virtue of the interlayer film, the interlayer film is used together with a first glass plate having a thickness of 1.6 mm or less (preferably 1.3 mm or less) and is arranged between the first glass plate and a second glass plate to be suitably used for obtaining laminated glass. Since the flexural rigidity can be sufficiently enhanced by virtue of the interlayer film, the interlayer film is used together with a first glass plate having a thickness of 1.6 mm or less (preferably 1.3 mm or less) and a second glass plate having a thickness of 1.6 mm or less (preferably 1.3 mm or less) and is arranged between the first glass plate and the second glass plate to be more suitably used for obtaining laminated glass.

Hereinafter, the details of each ingredient which constitutes the interlayer film according to the present invention will be described.

### (Resin)

Examples of the thermoplastic resin include a polyvinyl acetal resin, a polyacrylic resin, an ethylene-vinyl acetate copolymer resin, an ethylene-acrylic acid copolymer resin, a polyurethane resin, a polyvinyl alcohol resin, and the like. Thermoplastic resins other than these may be used. One kind of the thermoplastic resin may be used alone, and two or more kinds thereof may be used in combination.

It is preferred that the thermoplastic resin contain a polyvinyl acetal resin, an acrylic polymer, an urethane polymer, a silicone polymer, a kind of rubber or a vinyl acetate polymer, and it is more preferred that the thermoplastic resin contain a polyvinyl acetal resin or an acrylic polymer. In this preferred embodiment, one kind of the thermoplastic resin may be used alone, and two or more kinds thereof may be used in combination. Since the flexural rigidity and the sound insulating properties can be effectively enhanced, it is also preferred that the thermoplastic resin contain both of a polyvinyl acetal resin and an acrylic polymer. It is further preferred that the thermoplastic resin contain a polyvinyl acetal resin. By the use of the polyvinyl acetal resin, the toughness is effectively enhanced and the penetration resistance is further enhanced.

From the viewpoint of further enhancing the flexural rigidity and the sound insulating properties, it is preferred that the polyvinyl acetal resin be a polyvinyl acetoacetal resin or a polyvinyl butyral resin.

The interlayer film may include a polyvinyl acetal resin and a thermoplastic resin other than the polyvinyl acetal resin. The interlayer film may include a thermoplastic resin other than the acrylic polymer and an acrylic polymer. It is also preferred that the thermoplastic resin contain a thermoplastic resin other than the polyvinyl acetal resin. It is preferred that the thermoplastic resin other than the thermoplastic resin be an acrylic polymer. By the use of the acrylic polymer, the flexural rigidity and the sound insulating properties are effectively enhanced.

It is preferred that the acrylic polymer be a polymer of a polymerization component containing (meth)acrylic acid and a (meth) acrylic acid ester. It is preferred that the acrylic polymer be a poly(meth)acrylic acid ester.

The poly(meth)acrylic acid ester is not particularly limited. Examples of the poly(meth)acrylic acid ester include poly(methyl (meth)acrylate), poly(ethyl (meth)acrylate), poly(n-propyl (meth)acrylate), poly(i-propyl (meth)acrylate), poly(n-butyl (meth)acrylate), poly(i-butyl (meth)acrylate), poly(t-butyl (meth)acrylate), poly(2-ethylhexyl (meth)acrylate), poly(2-hydroxyethyl (meth)acrylate), poly(4-hydroxybutyl (meth)acrylate), poly(glycidyl (meth)acrylate), poly(octyl (meth)acrylate), poly(propyl (meth)acrylate), poly(2-ethyloctyl (meth)acrylate), poly(nonyl (meth)acrylate), poly(isononyl (meth)acrylate), poly(decyl (meth)acrylate), poly(isodecyl (meth)acrylate), poly(lauryl (meth)acrylate), poly(isotetradecyl (meth)acrylate), poly(cyclohexyl (meth)acrylate), poly(benzyl (meth)acrylate), and the like. Of these, a polyacrylic acid ester is preferred and poly(ethyl acrylate), poly(n-butyl acrylate), poly(2-ethylhexyl acrylate) or poly(octyl acrylate) is more preferred because the temperature showing the maximum value of the loss tangent can be easily controlled within a moderate range in a dynamic viscoelastic spectrum. Furthermore, since the poly(meth)acrylic acid ester has a polar group, by virtue of hydrogen bonding, the adhesive force between the interlayer film and a sheet of glass and the flexural rigidity of laminated glass can be further enhanced. Moreover, when the polyvinyl acetal resin and the poly (meth) acrylic acid ester are mixed to be used, from the viewpoint of enhancing the affinity between the polyvinyl acetal resin and the poly(meth)acrylic acid ester, it is preferred that the poly(meth)acrylic acid ester have a polar group. From the viewpoint of further enhancing the flexural rigidity, it is preferred that a material (a component to be polymerized) for the acrylic polymer contain poly(2-hydroxyethyl (meth)acrylate) or poly(4-hydroxybutyl (meth)acrylate). Moreover, by the use of these preferred poly(meth)acrylic acid esters, the productivity of the interlayer film and the balance of characteristics of the interlayer film are further improved. One kind of the poly (meth) acrylic acid ester may be used alone, and two or more kinds thereof may be used in combination.

The thermoplastic resin may have a crosslinked structure. By making the thermoplastic resin have a crosslinked structure, the shear storage elastic modulus can be controlled and an interlayer film having both excellent flexibility and high strength can be prepared. Examples of a method for making the thermoplastic resin have a crosslinkage include a method of previously introducing functional groups reactive with each other into the polymer structure of the resin to form a crosslinkage, a method of using a crosslinking agent having two or more functional groups reactive against functional groups existing in the polymer structure of the resin to make the thermoplastic resin have a crosslinkage, a method of using a radical generator having hydrogen extracting performance such as a peroxide to make the polymer have a crosslinkage, a method of making the thermoplastic resin have a crosslinkage by electron beam irradiation, and the like. Of these, a method of previously introducing functional groups reactive with each other into the polymer structure of the resin to form a crosslinkage is suitable because the shear storage elastic modulus is easily controlled and the productivity of the interlayer film is enhanced.

For example, the polyvinyl acetal resin can be produced by acetalizing polyvinyl alcohol with an aldehyde. It is preferred that the polyvinyl acetal resin be an acetalized product of polyvinyl alcohol. For example, the polyvinyl alcohol can be obtained by saponifying polyvinyl acetate. The saponification degree of the polyvinyl alcohol generally falls within the range of 70 to 99.9% by mole.

The average polymerization degree of the polyvinyl alcohol (PVA) is preferably 200 or more, more preferably 500 or more, even more preferably 800 or more, further preferably 1500 or more, especially preferably 2000 or more, most preferably 2700 or more, preferably 5000 or less, more preferably 4000 or less and further preferably 3500 or less. When the average polymerization degree is the above lower limit or more, the penetration resistance and flexural rigidity of laminated glass are further enhanced. When the average polymerization degree is the above upper limit or less, formation of an interlayer film is facilitated.

The average polymerization degree of the polyvinyl alcohol is determined by a method in accordance with JIS K6726 "Testing methods for polyvinyl alcohol".

It is preferred that the number of carbon atoms of the acetal group in the polyvinyl acetal resin fall within the range of 2 to 10, it is more preferred that the number of carbon atoms fall within the range of 2 to 5, and it is further preferred that the number of carbon atoms be 2, 3 or 4. Moreover, it is preferred that the number of carbon atoms of the acetal group in the polyvinyl acetal resin be 2 or 4, and in this case, the polyvinyl acetal resin is efficiently produced.

In general, as the aldehyde, an aldehyde with 1 to 10 carbon atoms is suitably used. Examples of the aldehyde with 1 to 10 carbon atoms include formaldehyde, acetaldehyde, propionaldehyde, n-butyraldehyde, isobutyraldehyde, n-valeraldehyde, 2-ethylbutyraldehyde, n-hexylaldehyde, n-octylaldehyde, n-nonylaldehyde, n-decylaldehyde, benzaldehyde, and the like. Of these, acetaldehyde, propionaldehyde, n-butyraldehyde, isobutyraldehyde, n-hexylaldehyde or n-valeraldehyde is preferred, acetaldehyde, propionaldehyde, n-butyraldehyde, isobutyraldehyde or n-valeraldehyde is more preferred, and acetaldehyde, n-butyraldehyde or n-valeraldehyde is further preferred. One kind of the aldehyde may be used alone, and two or more kinds thereof may be used in combination.

The content of the hydroxyl group (the amount of hydroxyl groups) of the polyvinyl acetal resin is preferably 15% by mole or more, more preferably 18% by mole or more, preferably 40% by mole or less and more preferably 35% by mole or less. When the content of the hydroxyl group is the above lower limit or more, the adhesive force of the interlayer film is further enhanced. Moreover, when the content of the hydroxyl group is the above upper limit or less, the flexibility of the interlayer film is enhanced and the handling of the interlayer film is facilitated.

The content of the hydroxyl group of the polyvinyl acetal resin is a mole fraction, represented in percentage, obtained by dividing the amount of ethylene groups to which the hydroxyl group is bonded by the total amount of ethylene groups in the main chain. For example, the amount of ethylene groups to which the hydroxyl group is bonded can be measured in accordance with JIS K6728 "Testing methods for polyvinyl butyral".

The acetylation degree (the amount of acetyl groups) of the polyvinyl acetal resin is preferably 0.1% by mole or more, more preferably 0.3% by mole or more, further preferably 0.5% by mole or more, preferably 30% by mole or less, more preferably 25% by mole or less and further preferably 20% by mole or less. When the acetylation degree is the above lower limit or more, the compatibility between the polyvinyl acetal resin and a plasticizer or another thermoplastic resin is enhanced and the sound insulating properties can be further enhanced. When the acetylation degree is the above upper limit or less, with regard to the interlayer film and laminated glass, the moisture resistance thereof is enhanced.

The acetylation degree is a mole fraction, represented in percentage, obtained by dividing the amount of ethylene groups to which the acetyl group is bonded by the total amount of ethylene groups in the main chain. For example, the amount of ethylene groups to which the acetyl group is bonded can be measured in accordance with JIS K6728 "Testing methods for polyvinyl butyral".

The acetalization degree of the polyvinyl acetal resin (the butyralization degree in the case of a polyvinyl butyral resin) is preferably 60% by mole or more, more preferably 63% by mole or more, preferably 85% by mole or less, more preferably 75% by mole or less and further preferably 70% by mole or less. When the acetalization degree is the above lower limit or more, the compatibility between the polyvinyl acetal resin and a plasticizer or another thermoplastic resin is enhanced and the sound insulating properties can be further enhanced. When the acetalization degree is the above upper limit or less, the reaction time required for producing the polyvinyl acetal resin is shortened.

The acetalization degree is a mole fraction, represented in percentage, obtained by dividing a value obtained by subtracting the amount of ethylene groups to which the hydroxyl group is bonded and the amount of ethylene groups to which the acetyl group is bonded from the total amount of ethylene groups in the main chain by the total amount of ethylene groups in the main chain.

In this connection, it is preferred that the content of the hydroxyl group (the amount of hydroxyl groups), the acetalization degree (the butyralization degree) and the acetylation degree be calculated from the results measured by a method in accordance with JIS K6728 "Testing methods for polyvinyl butyral". In this context, a method in accordance with ASTM D1396-92 may be used. When the polyvinyl acetal resin is a polyvinyl butyral resin, the content of the hydroxyl group (the amount of hydroxyl groups), the acetalization degree (the butyralization degree) and the acetylation degree can be calculated from the results measured by a method in accordance with JIS K6728 "Testing methods for polyvinyl butyral".

In 100% by weight of the whole thermoplastic resin, the content of the polyvinyl acetal resin is preferably 10% by weight or more, more preferably 20% by weight or more, further preferably 25% by weight or more and preferably 100% by weight or less. When the content of the polyvinyl acetal resin is the above lower limit or more, the flexural rigidity is effectively enhanced. In 100% by weight of the whole thermoplastic resin, the content of the polyvinyl acetal resin may be 90% by weight or less and may be 75% by weight or less.

In 100% by weight of the whole thermoplastic resin, each of the content of a thermoplastic resin other than the polyvinyl acetal resin and the content of an acrylic polymer is preferably 15% by weight or more, more preferably 20% by weight or more, further preferably 25% by weight or more and preferably 100% by weight or less. When each of the content of a thermoplastic resin other than the polyvinyl acetal resin and the content of an acrylic polymer is the above lower limit or more, the flexural rigidity and the sound insulating properties are effectively enhanced, the recyclability can also be enhanced, the cleavage of a molecular chain is hardly caused in an extruder at the time of recycling, and the lowering in flexural rigidity after recycling can be suppressed. In 100% by weight of the whole thermoplastic resin, each of the content of a thermoplastic resin other than the polyvinyl acetal resin and the content of an acrylic polymer may be 90% by weight or less, may be 80% by weight or less and may be 70% by weight or less. When the content of a thermoplastic resin other than the polyvinyl acetal resin or the content of an acrylic polymer is 70% by weight or less, the recyclability can be further enhanced.

### (Plasticizer)

From the viewpoint of further enhancing the adhesive force of the interlayer film and the penetration resistance, it is preferred that the interlayer film include a plasticizer. When the thermoplastic resin included in the interlayer film contains a polyvinyl acetal resin, it is especially preferred that the interlayer film include a plasticizer. One kind of the plasticizer may be used alone, and two or more kinds thereof may be used in combination.

Examples of the plasticizer include organic ester plasticizers such as a monobasic organic acid ester and a polybasic organic acid ester, organic phosphate plasticizers such as an organic phosphate plasticizer and an organic phosphite plasticizer, and the like. Of these, organic ester plasticizers are preferred. It is preferred that the plasticizer be a liquid plasticizer.

Examples of the monobasic organic acid ester include a glycol ester obtained by the reaction of a glycol with a monobasic organic acid, and the like. Examples of the glycol include triethylene glycol, tetraethylene glycol, tripropylene glycol, and the like. Examples of the monobasic organic acid include butyric acid, isobutyric acid, caproic acid, 2-ethylbutyric acid, heptanoic acid, n-octylic acid, 2-ethylhexanoic acid, n-nonylic acid, decanoic acid, and the like.

Examples of the polybasic organic acid ester include an ester compound of a polybasic organic acid and an alcohol having a linear or branched structure of 4 to 8 carbon atoms. Examples of the polybasic organic acid include adipic acid, sebacic acid, azelaic acid, and the like.

Examples of the organic ester plasticizer include triethylene glycol di-2-ethylpropanoate, triethylene glycol di-2-ethylbutyrate, triethylene glycol di-2-ethylhexanoate, triethylene glycol dicaprylate, triethylene glycol di-n-octanoate, triethylene glycol di-n-heptanoate, tetraethylene glycol di-n-heptanoate, dibutyl sebacate, dioctyl azelate, dibutyl carbitol adipate, ethylene glycol di-2-ethylbutyrate, 1,3-propylene glycol di-2-ethylbutyrate, 1,4-butylene glycol di-2-ethylbutyrate, diethylene glycol di-2-ethylbutyrate, diethylene glycol di-2-ethylhexanoate, dipropylene glycol di-2-ethylbutyrate, triethylene glycol di-2-ethylpentanoate, tetraethylene glycol di-2-ethylbutyrate, diethylene glycol dicaprylate, dihexyl adipate, dioctyl adipate, hexyl cyclohexyl adipate, a mixture of heptyl adipate and nonyl adipate, diisononyl adipate, diisodecyl adipate, heptyl nonyl adipate, dibutyl sebacate, oil-modified sebacic alkyds, a mixture of a phosphoric acid ester and an adipic acid ester, and the like. Organic ester plasticizers other than these may be used. Other adipic acid esters other than the above-described adipic acid esters may be used.

Examples of the organic phosphate plasticizer include tributoxyethyl phosphate, isodecyl phenyl phosphate, triisopropyl phosphate, and the like.

It is preferred that the plasticizer be a diester plasticizer represented by the following formula (1).

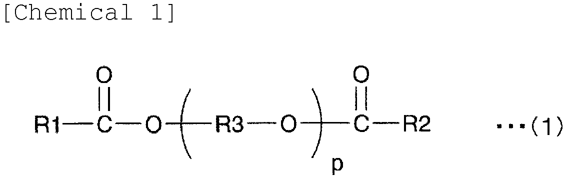

In the foregoing formula (1), R1 and R2 each represent an organic group with 2 to 10 carbon atoms, R3 represents an ethylene group, an isopropylene group or an n-propylene group, and p represents an integer of 3 to 10. It is preferred that R1 and R2 in the foregoing formula (1) each be an organic group with 5 to 10 carbon atoms, and it is more preferred that R1 and R2 each be an organic group with 6 to 10 carbon atoms.

It is preferred that the plasticizer include triethylene glycol di-2-ethylhexanoate (3GO), triethylene glycol di-2-ethylbutyrate (3GH) or triethylene glycol di-2-ethylpropanoate, it is more preferred that the plasticizer include triethylene glycol di-2-ethylhexanoate or triethylene glycol di-2-ethylbutyrate, and it is further preferred that the plasticizer include triethylene glycol di-2-ethylhexanoate.

The content of the plasticizer is not particularly limited. Relative to 100 parts by weight of the thermoplastic resin (when the thermoplastic resin is a polyvinyl acetal resin, 100 parts by weight of the polyvinyl acetal resin), the content of the plasticizer is preferably 2 parts by weight or more, more preferably 5 parts by weight or more, further preferably 10 parts by weight or more, preferably 80 parts by weight or less and more preferably 60 parts by weight or less. When the content of the plasticizer is the above lower limit or more, the penetration resistance and the sound insulating properties of laminated glass are further enhanced. When the content of the plasticizer is the above upper limit or less, the transparency of the interlayer film is further enhanced.

### (Heat shielding compound)

It is preferred that the interlayer film include a heat shielding compound. One kind of the heat shielding compound may be used alone, and two or more kinds thereof may be used in combination.

### Ingredient X:

It is preferred that the interlayer film include at least one kind of Ingredient X among a phthalocyanine compound, a naphthalocyanine compound and an anthracyanine compound. It is preferred that the first layer contain the Ingredient X. The Ingredient X is a heat shielding compound. One kind of the Ingredient X may be used alone, and two or more kinds thereof may be used in combination.

The Ingredient X is not particularly limited. As the Ingredient X, conventionally known phthalocyanine compound, naphthalocyanine compound and anthracyanine compound can be used.

With regard to the interlayer film and laminated glass, from the viewpoint of further enhancing the heat shielding properties thereof, it is preferred that the Ingredient X be at least one kind selected from the group consisting of phthalocyanine, a derivative of phthalocyanine, naphthalocyanine and a derivative of naphthalocyanine, and it is more preferred that the Ingredient X be at least one kind among phthalocyanine and a derivative of phthalocyanine.

From the viewpoints of effectively enhancing the heat shielding properties and maintaining the visible light transmittance at a higher level over a long period of time, it is preferred that the Ingredient X contain vanadium atoms or copper atoms. It is preferred that the Ingredient X contain vanadium atoms and it is also preferred that the Ingredient X contain copper atoms. It is more preferred that the Ingredient X be at least one kind among phthalocyanine containing vanadium atoms or copper atoms and a derivative of phthalocyanine containing vanadium atoms or copper atoms. With regard to the interlayer film and laminated glass, from the viewpoint of still further enhancing the heat shielding properties thereof, it is preferred that the Ingredient X have a structural unit in which an oxygen atom is bonded to a vanadium atom.

In 100% by weight of the interlayer film, the content of the Ingredient X is preferably 0.001% by weight or more, more preferably 0.005% by weight or more, further preferably 0.01% by weight or more, especially preferably 0.02% by weight or more, preferably 0.2% by weight or less, more preferably 0.1% by weight or less, further preferably 0.05% by weight or less and especially preferably 0.04% by weight or less. When the content of the Ingredient X is the above lower limit or more and the above upper limit or less, the heat shielding properties are sufficiently enhanced and the visible light transmittance is sufficiently enhanced. For example, it is possible to make the visible light transmittance 70% or more.

### Heat shielding particles:

It is preferred that the interlayer film include heat shielding particles. The heat shielding particle is a heat shielding compound. By the use of heat shielding particles, infrared rays (heat rays) can be effectively cut off. One kind of the heat shielding particles may be used alone, and two or more kinds thereof may be used in combination.

From the viewpoint of further enhancing the heat shielding properties of laminated glass, it is more preferred that the heat shielding particles be metal oxide particles. It is preferred that the heat shielding particle be a particle (a metal oxide particle) formed from an oxide of a metal.

The energy amount of an infrared ray with a wavelength of 780 nm or longer which is longer than that of visible light is small as compared with an ultraviolet ray. However, the thermal action of infrared rays is large, and when infrared rays are absorbed into a substance, heat is released from the substance. As such, infrared rays are generally called heat rays. By the use of the heat shielding particles, infrared rays (heat rays) can be effectively cut off. In this connection, the heat shielding particle means a particle capable of absorbing infrared rays.

Specific examples of the heat shielding particles include metal oxide particles such as aluminum-doped tin oxide particles, indium-doped tin oxide particles, antimonydoped tin oxide particles (ATO particles), gallium-doped zinc oxide particles (GZO particles), indium-doped zinc oxide particles (IZO particles), aluminum-doped zinc oxide particles (AZO particles), niobium-doped titanium oxide particles, sodium-doped tungsten oxide particles, cesium-doped tungsten oxide particles, thallium-doped tungsten oxide particles, rubidium-doped tungsten oxide particles, tin-doped indium oxide particles (ITO particles), tin-doped zinc oxide particles and silicon-doped zinc oxide particles, lanthanum hexaboride (LaB₆) particles, and the like. Heat shielding particles other than these may be used. Of these, since the heat ray shielding function is high, preferred are metal oxide particles, more preferred are ATO particles, GZO particles, IZO particles, ITO particles or tungsten oxide particles, and especially preferred are ITO particles or tungsten oxide particles. In particular, since the heat ray shielding function is high and the particles are readily available, preferred are tin-doped indium oxide particles (ITO particles), and also preferred are tungsten oxide particles.

With regard to the interlayer film and laminated glass, from the viewpoint of further enhancing the heat shielding properties thereof, it is preferred that the tungsten oxide particles be metal-doped tungsten oxide particles. Examples of the "tungsten oxide particles" include metal-doped tungsten oxide particles. Specifically, examples of the metal-doped tungsten oxide particles include sodium-doped tungsten oxide particles, cesium-doped tungsten oxide particles, thallium-doped tungsten oxide particles, rubidium-doped tungsten oxide particles, and the like.

With regard to the interlayer film and laminated glass, from the viewpoint of further enhancing the heat shielding properties thereof, cesium-doped tungsten oxide particles are especially preferred. With regard to the interlayer film and laminated glass, from the viewpoint of still further enhancing the heat shielding properties thereof, it is preferred that the cesium-doped tungsten oxide particles be tungsten oxide particles represented by the formula: Cs_{0.33}WO₃.

The average particle diameter of the heat shielding particles is preferably 0.01 µm or more, more preferably 0.02 µm or more, preferably 0.1 µm or less and more preferably 0.05 µm or less. When the average particle diameter is the above lower limit or more, the heat ray shielding properties are sufficiently enhanced. When the average particle diameter is the above upper limit or less, the dispersibility of heat shielding particles is enhanced.

The "average particle diameter" refers to the volume average particle diameter. The average particle diameter can be measured using a particle size distribution measuring apparatus ("UPA-EX150" available from NIKKISO CO., LTD.), or the like.

In 100% by weight of the interlayer film, the content of the heat shielding particles is preferably 0.01% by weight or more, more preferably 0.1% by weight or more, further preferably 1% by weight or more, especially preferably 1.5% by weight or more, preferably 6% by weight or less, more preferably 5.5% by weight or less, further preferably 4% by weight or less, especially preferably 3.5% by weight or less and most preferably 3.0% by weight or less. When the content of the heat shielding particles is the above lower limit or more and the above upper limit or less, the heat shielding properties are sufficiently enhanced and the visible light transmittance is sufficiently enhanced.

### (Metal salt)

It is preferred that the interlayer film include at least one kind of metal salt (hereinafter, sometimes described as Metal salt M) among an alkali metal salt and an alkaline earth metal salt. By the use of the Metal salt M, controlling the adhesivity between the interlayer film and a lamination glass member is facilitated. One kind of the Metal salt M may be used alone, and two or more kinds thereof may be used in combination.

It is preferred that the Metal salt M contain at least one kind of metal selected from the group consisting of Li, Na, K, Rb, Cs, Mg, Ca, Sr and Ba. It is preferred that the metal salt included in the interlayer film contain at least one kind of metal among K and Mg.

Moreover, it is more preferred that the Metal salt M be an alkali metal salt of an organic acid with 2 to 16 carbon atoms or an alkaline earth metal salt of an organic acid with 2 to 16 carbon atoms, and it is further preferred that the Metal salt M be a magnesium carboxylate with 2 to 16 carbon atoms or a potassium carboxylate with 2 to 16 carbon atoms.

Although the magnesium carboxylate with 2 to 16 carbon atoms and the potassium carboxylate with 2 to 16 carbon atoms are not particularly limited, examples thereof include magnesium acetate, potassium acetate, magnesium propionate, potassium propionate, magnesium 2-ethylbutyrate, potassium 2-ethylbutanoate, magnesium 2-ethylhexanoate, potassium 2-ethylhexanoate, and the like.

The total of the contents of Mg and K in the interlayer film is preferably 5 ppm or more, more preferably 10 ppm or more, further preferably 20 ppm or more, preferably 300 ppm or less, more preferably 250 ppm or less and further preferably 200 ppm or less. When the total of the contents of Mg and K is the above lower limit or more and the above upper limit or less, the adhesivity between the interlayer film and a lamination glass member can be further well controlled.

### (Ultraviolet ray screening agent)

It is preferred that the interlayer film include an ultraviolet ray screening agent. By the use of an ultraviolet ray screening agent, even when the interlayer film and the laminated glass are used for a long period of time, the visible light transmittance becomes further difficult to be lowered. One kind of the ultraviolet ray screening agent may be used alone, and two or more kinds thereof may be used in combination.

Examples of the ultraviolet ray screening agent include an ultraviolet ray absorber. It is preferred that the ultraviolet ray screening agent be an ultraviolet ray absorber.

Examples of the ultraviolet ray screening agent include an ultraviolet ray screening agent containing a metal atom, an ultraviolet ray screening agent containing a metal oxide, an ultraviolet ray screening agent having a benzotriazole structure, an ultraviolet ray screening agent having a benzophenone structure, an ultraviolet ray screening agent having a triazine structure, an ultraviolet ray screening agent having a malonic acid ester structure, an ultraviolet ray screening agent having an oxanilide structure, an ultraviolet ray screening agent having a benzoate structure, and the like.

Examples of the ultraviolet ray screening agent containing a metal atom include platinum particles, particles in which the surface of platinum particles is coated with silica, palladium particles, particles in which the surface of palladium particles is coated with silica, and the like. It is preferred that the ultraviolet ray screening agent not be heat shielding particles.

The ultraviolet ray screening agent is preferably an ultraviolet ray screening agent having a benzotriazole structure, an ultraviolet ray screening agent having a benzophenone structure, an ultraviolet ray screening agent having a triazine structure or an ultraviolet ray screening agent having a benzoate structure, more preferably an ultraviolet ray screening agent having a benzotriazole structure or an ultraviolet ray screening agent having a benzophenone structure, and further preferably an ultraviolet ray screening agent having a benzotriazole structure.

Examples of the ultraviolet ray screening agent containing a metal oxide include zinc oxide, titanium oxide, cerium oxide, and the like. Furthermore, with regard to the ultraviolet ray screening agent containing a metal oxide, the surface thereof may be coated with any material. Examples of the coating material for the surface of the ultraviolet ray screening agent containing a metal oxide include an insulating metal oxide, a hydrolyzable organosilicon compound, a silicone compound, and the like.

Examples of the ultraviolet ray screening agent having a benzotriazole structure include ultraviolet ray absorbers having a benzotriazole structure such as 2-(2'-hydroxy-5'-methylphenyl)benzotriazole ("Tinuvin P" available from BASF Japan Ltd.), 2-(2'-hydroxy-3',5'-di-t-butylphenyl)benzotriazole ("Tinuvin 320" available from BASF Japan Ltd.), 2-(2'-hydroxy-3'-t-butyl-5-methylphenyl)-5-chlorobenzotriazole ("Tinuvin 326" available from BASF Japan Ltd.) and 2-(2'-hydroxy-3',5'-di-amylphenyl)benzotriazole ("Tinuvin 328" available from BASF Japan Ltd.). It is preferred that the ultraviolet ray screening agent be an ultraviolet ray screening agent having a benzotriazole structure containing a halogen atom, and it is more preferred that the ultraviolet ray screening agent be an ultraviolet ray screening agent having a benzotriazole structure containing a chlorine atom, because those are excellent in ultraviolet ray absorbing performance.

Examples of the ultraviolet ray screening agent having a benzophenone structure include octabenzone ("Chimassorb 81" available from BASF Japan Ltd.), and the like.

Examples of the ultraviolet ray screening agent having a triazine structure include "LA-F70" available from ADEKA CORPORATION, 2-(4,6-diphenyl-1,3,5-triazine-2-yl)-5-[(hexyl)oxy]-phenol ("Tinuvin 1577FF" available from BASF Japan Ltd.), and the like.

Examples of the ultraviolet ray screening agent having a malonic acid ester structure include dimethyl(p-methoxybenzylidene)malonate, tetraethyl-2,2-(1,4-phenylenedimethylidene)bismalonate, 2-(p-methoxybenzylidene)-bis(1,2,2,6,6-pentamethyl-4-piperidinyl)malonate, and the like.

Examples of a commercial product of the ultraviolet ray screening agent having a malonic acid ester structure include Hostavin B-CAP, Hostavin PR-25 and Hostavin PR-31 (any of these is available from Clariant Japan K.K.).

Examples of the ultraviolet ray screening agent having an oxanilide structure include a kind of oxalic acid diamide having a substituted aryl group and the like on the nitrogen atom such as N-(2-ethylphenyl)-N'-(2-ethoxy-5-t-butylphenyl)oxalic acid diamide, N-(2-ethylphenyl)-N'-(2-ethoxy-phenyl)oxalic acid diamide and 2-ethyl-2'-ethoxy-oxanilide ("Sanduvor VSU" available from Clariant Japan K.K.).

Examples of the ultraviolet ray screening agent having a benzoate structure include 2,4-di-tert-butylphenyl-3,5-di-tert-butyl-4-hydroxybenzoate ("Tinuvin 120" available from BASF Japan Ltd.), and the like.

From the viewpoint of further suppressing the lowering in visible light transmittance after the lapse of a certain period of time, in 100% by weight of the interlayer film, the content of the ultraviolet ray screening agent is preferably 0.1% by weight or more, more preferably 0.2% by weight or more, further preferably 0.3% by weight or more, especially preferably 0.5% by weight or more, preferably 2.5% by weight or less, more preferably 2% by weight or less, further preferably 1% by weight or less and especially preferably 0.8% by weight or less. In particular, by setting the content of the ultraviolet ray screening agent to be 0.2% by weight or more in 100% by weight of the interlayer film, with regard to the interlayer film and laminated glass, the lowering in visible light transmittance thereof after the lapse of a certain period of time can be significantly suppressed.

### (Oxidation inhibitor)

It is preferred that the interlayer film include an oxidation inhibitor. One kind of the oxidation inhibitor may be used alone, and two or more kinds thereof may be used in combination.

Examples of the oxidation inhibitor include a phenol-based oxidation inhibitor, a sulfur-based oxidation inhibitor, a phosphorus-based oxidation inhibitor, and the like. The phenol-based oxidation inhibitor is an oxidation inhibitor having a phenol skeleton. The sulfur-based oxidation inhibitor is an oxidation inhibitor containing a sulfur atom. The phosphorus-based oxidation inhibitor is an oxidation inhibitor containing a phosphorus atom.

It is preferred that the oxidation inhibitor be a phenol-based oxidation inhibitor or a phosphorus-based oxidation inhibitor.

Examples of the phenol-based oxidation inhibitor include 2,6-di-t-butyl-p-cresol (BHT), butylated hydroxyanisole (BHA), 2,6-di-t-butyl-4-ethylphenol, stearyl β-(3,5-di-t-butyl-4-hydroxyphenyl)propionate, 2,2'-methylenebis-(4-methyl-6-butylphenol), 2,2'-methylenebis-(4-ethyl-6-t-butylphenol), 4,4'-butylidene-bis-(3-methyl-6-t-butylphenol), 1,1,3-tris-(2-methyl-hydroxy-5-t-butylphenyl)butane, tetrakis[methylene-3-(3',5'-butyl-4-hydroxyphenyl)propionate]methane, 1,3,3-tris-(2-methyl-4-hydroxy-5-t-butylphenol)butane, 1,3,5-trimethyl-2,4,6-tris(3,5-di-t-butyl-4-hydroxybenzyl)benzene, bis(3,3'-t-butylphenol)butyric acid glycol ester, bis(3-t-butyl-4-hydroxy-5-methylbenzenepropanoic acid)ethylenebis(oxyethylene), and the like. One kind or two or more kinds among these oxidation inhibitors are suitably used.

Examples of the phosphorus-based oxidation inhibitor include tridecyl phosphite, tris(tridecyl) phosphite, triphenyl phosphite, trinonylphenyl phosphite, bis(tridecyl)pentaerithritol diphosphite, bis(decyl)pentaerithritol diphosphite, tris(2,4-di-t-butylphenyl) phosphite, bis(2,4-di-t-butyl-6-methylphenyl)ethyl ester phosphorous acid, tris(2,4-di-t-butylphenyl) phosphite, 2,2'-methylenebis(4,6-di-t-butyl-1-phenyloxy)(2-ethylhexyloxy)phosphorus, and the like. One kind or two or more kinds among these oxidation inhibitors are suitably used.

Examples of a commercial product of the oxidation inhibitor include "IRGANOX 245" available from BASF Japan Ltd., "IRGAFOS 168" available from BASF Japan Ltd., "IRGAFOS 38" available from BASF Japan Ltd., "Sumilizer BHT" available from Sumitomo Chemical Co., Ltd., "IRGANOX 1010" available from BASF Japan Ltd., and the like.

With regard to the interlayer film and laminated glass, in order to maintain high visible light transmittance thereof over a long period of time, it is preferred that the content of the oxidation inhibitor be 0.1% by weight or more in 100% by weight of the interlayer film. Moreover, since an effect commensurate with the addition of an oxidation inhibitor is not attained, it is preferred that the content of the oxidation inhibitor be 2% by weight or less in 100% by weight of the interlayer film.

### (Other ingredients)

The interlayer film may include additives such as a coupling agent containing silicon, aluminum or titanium, a dispersing agent, a surfactant, a flame retardant, an antistatic agent, a kind of filler, a pigment, a dye, an adhesive force regulating agent, a moisture-resistance improving agent, a fluorescent brightening agent and an infrared ray absorber, as necessary. One kind of these additives may be used alone, and two or more kinds thereof may be used in combination.

In order to control the shear storage elastic modulus within a suitable range, the interlayer film may include a kind of filler. Examples of the filler include calcium carbonate particles, silica particles, and the like. From the viewpoint of effectively enhancing the flexural rigidity and effectively suppressing a decrease in transparency, silica particles are preferred.

In 100% by weight of the interlayer film, the content of the filler is preferably 1% by weight or more, more preferably 5% by weight or more, further preferably 10 parts by weight or more, preferably 95% by weight or less and more preferably 90% by weight or less.

### (Other details of interlayer film for laminated glass)

The thickness of the interlayer film is not particularly limited. From the viewpoint of the practical aspect and the viewpoint of sufficiently enhancing the penetration resistance and the flexural rigidity of laminated glass, the thickness of the interlayer film is preferably 0.1 mm or more, more preferably 0.25 mm or more, preferably 3 mm or less and more preferably 2.0 mm or less. When the thickness of the interlayer film is the above lower limit or more, the penetration resistance and the flexural rigidity of laminated glass are further enhanced. When the thickness of the interlayer film is the above upper limit or less, the transparency of the interlayer film is further improved.

The production method of the interlayer film according to the present invention is not particularly limited. Examples of the production method of the interlayer film according to the present invention include a method of extruding a resin composition with an extruder.

It is preferred that at least one surface among surfaces of both sides of the interlayer film have a recess/protrusion shape. It is more preferred that surfaces of both sides of the interlayer film have a recess/protrusion shape. The method for forming the recess/protrusion shape is not particularly limited, and examples thereof include a lip embossing method, an embossing roll method, a calender roll method, a profile extrusion method, and the like. Since it is possible to quantitatively form many embosses with a recess/protrusion shape constituting a constant uneven pattern, the embossing roll method is preferred.

### (Laminated glass)

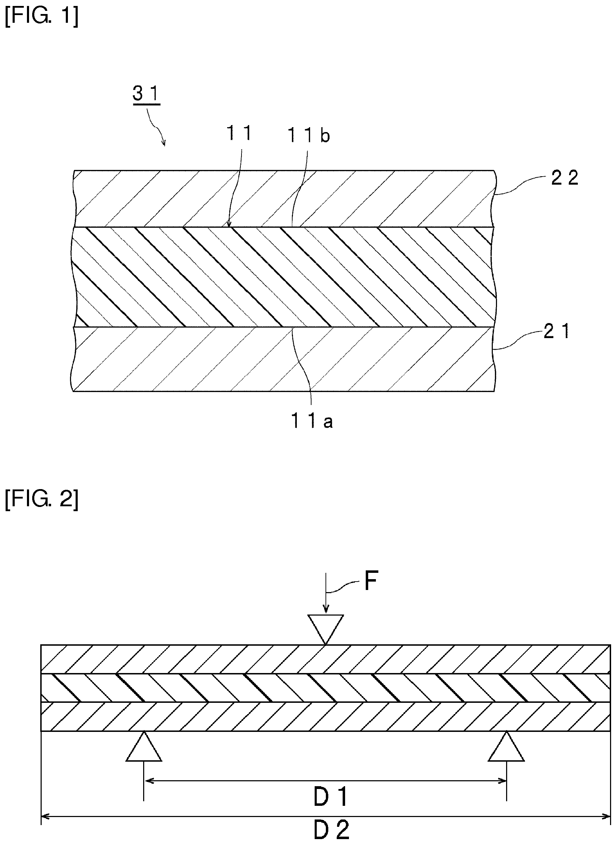

Fig. 1 is a sectional view schematically showing an example of laminated glass prepared with the interlayer film for laminated glass in accordance with one embodiment of the present invention.

Laminated glass 31 shown in Fig. 1 is provided with a first lamination glass member 21, a second lamination glass member 22 and an interlayer film 11. The interlayer film 11 is a single-layered interlayer film and is a first layer. The interlayer film 11 is arranged between the first lamination glass member 21 and the second lamination glass member 22 to be sandwiched therebetween.

The first lamination glass member 21 is layered on a first surface 11a of the interlayer film 11. The second lamination glass member 22 is layered on a second surface 11b opposite to the first surface 11a of the interlayer film 11.

As described above, the laminated glass according to the present invention is provided with a first lamination glass member, a second lamination glass member and an interlayer film, and the interlayer film is the interlayer film for laminated glass according to the present invention. In the laminated glass according to the present invention, the above-mentioned interlayer film is arranged between the first lamination glass member and the second lamination glass member.

It is preferred that the first lamination glass member be a first glass plate. It is preferred that the second lamination glass member be a second glass plate.

Examples of the lamination glass member include a glass plate, a PET (polyethylene terephthalate) film, and the like. As the laminated glass, laminated glass in which an interlayer film is sandwiched between a glass plate and a PET film or the like, as well as laminated glass in which an interlayer film is sandwiched between two glass plates, is included. The laminated glass is a laminate provided with a glass plate, and it is preferred that at least one glass plate be used. It is preferred that each of the first lamination glass member and the second lamination glass member be a glass plate or a PET film, and the laminated glass be provided with a glass plate as at least one among the first lamination glass member and the second lamination glass member.

Examples of the glass plate include a sheet of inorganic glass and a sheet of organic glass. Examples of the inorganic glass include float plate glass, heat ray-absorbing plate glass, heat ray-reflecting plate glass, polished plate glass, figured glass, wired plate glass, and the like. The organic glass is synthetic resin glass substituted for inorganic glass. Examples of the organic glass include a polycarbonate plate, a poly(meth)acrylic resin plate, and the like. Examples of the poly(meth)acrylic resin plate include a polymethyl (meth)acrylate plate, and the like.

The thickness of the lamination glass member is preferably 1 mm or more, preferably 5 mm or less and more preferably 3 mm or less. Moreover, when the lamination glass member is a glass plate, the thickness of the glass plate is preferably 0.5 mm or more, more preferably 0.7 mm or more, preferably 5 mm or less and more preferably 3 mm or less. When the lamination glass member is a PET film, the thickness of the PET film is preferably 0.03 mm or more and preferably 0.5 mm or less.

By the use of the interlayer film according to the present invention, even when the thickness of laminated glass is thinned, the flexural rigidity of laminated glass can be maintained high. From the viewpoints of attaining reduced weight of laminated glass and decreasing the amount of the material for laminated glass to reduce the environmental load, and improving fuel consumption of an automobile by reduction in weight of laminated glass to reduce the environmental load, the thickness of the glass plate is preferably 2 mm or less, more preferably 1.8 mm or less, even more preferably 1.6 mm or less, still even more preferably 1.5 mm or less, further preferably 1.4 mm or less, even further preferably 1.3 mm or less, still further preferably 1.0 mm or less and especially preferably 0.7 mm or less. From the viewpoints of attaining reduced weight of laminated glass and decreasing the amount of the material for laminated glass to reduce the environmental load, and improving fuel consumption of an automobile by reduction in weight of laminated glass to reduce the environmental load, the sum of the thickness of the first glass plate and the thickness of the second glass plate is preferably 3.5 mm or less, more preferably 3.2 mm or less, further preferably 3 mm or less and especially preferably 2.8 mm or less.

The method for producing the laminated glass is not particularly limited. For example, the interlayer film is sandwiched between the first and the second lamination glass members, and then, passed through pressure rolls or subjected to decompression suction in a rubber bag, so that the air remaining between the first and the second lamination glass members and the interlayer film is removed. Afterward, the members are preliminarily bonded together at about 70 to 110°C to obtain a laminate. Next, by putting the laminate into an autoclave or by pressing the laminate, the members are press-bonded together at about 120 to 150°C and under a pressure of 1 to 1.5 MPa. In this way, laminated glass can be obtained.

Each of the interlayer film and the laminated glass can be used for automobiles, railway vehicles, aircraft, ships, buildings and the like. Each of the interlayer film and the laminated glass can also be used for applications other than these applications. It is preferred that the interlayer film and the laminated glass be an interlayer film and laminated glass for vehicles or for building respectively, and it is more preferred that the interlayer film and the laminated glass be an interlayer film and laminated glass for vehicles respectively. Each of the interlayer film and the laminated glass can be used for a windshield, side glass, rear glass or roof glass of an automobile, and the like. The interlayer film and the laminated glass are suitably used for automobiles. The interlayer film is used for obtaining laminated glass of an automobile.

Hereinafter, the present invention will be described in more detail with reference to examples. The present invention is not limited only to these examples.

The following materials were prepared.

### (Thermoplastic resin)

Polyvinyl acetal resins shown in the following Tables 1 and 2 were appropriately used. In the polyvinyl acetal resins used, acetaldehyde which has 2 carbon atoms or n-butyraldehyde which has 4 carbon atoms is used for the acetalization.

With regard to the polyvinyl acetal resin, the acetalization degree (the butyralization degree), the acetylation degree and the content of the hydroxyl group were measured by a method in accordance with JIS K6728 "Testing methods for polyvinyl butyral". In this connection, even in the cases of being measured according to ASTM D1396-92, numerical values similar to those obtained by a method in accordance with JIS K6728 "Testing methods for polyvinyl butyral" were exhibited. Moreover, when the kind of acetal is the acetoacetal, the acetalization degree was calculated by measuring the acetylation degree and the content of the hydroxyl group as in the case thereof, calculating the mole fraction from the measurement results obtained, and then subtracting the acetylation degree and the content of the hydroxyl group from 100% by mole.

Moreover, acrylic polymers shown in the following Tables 1 to 3 were appropriately used. Each of the acrylic polymers shown in the following Tables 1 to 3 is an acrylic polymer prepared by polymerizing a polymerization component containing ethyl acrylate, butyl acrylate, 2-hydroxyethyl acrylate and benzyl acrylate in respective contents shown in the following Tables 1 to 3.

### (Additive)

Silica particles ("BZ-400" available from TOSOH SILICA CORPORATION)

### (Plasticizer)

Triethylene glycol di-2-ethylhexanoate (3GO)

### (Ultraviolet ray screening agent)

Tinuvin 326 (2-(2'-hydroxy-3'-t-butyl-5-methylphenyl)-5-chlorobenzotriazole, "Tinuvin 326" available from BASF Japan Ltd.)

### (Oxidation inhibitor)

BHT (2,6-di-t-butyl-p-cresol)

### (Example 1)

### Preparation of composition for forming interlayer film:

One hundred parts by weight of a kind of the polyvinyl acetal resin shown in the following Table 1, 60 parts by weight of silica particles, 75 parts by weight of a plasticizer (3GO), 0.2 parts by weight of an ultraviolet ray screening agent (Tinuvin 326) and 0.2 parts by weight of an oxidation inhibitor (BHT) were mixed to obtain a composition for forming an interlayer film.

### Preparation of interlayer film:

By extruding a composition for forming an interlayer film with an extruder, a single-layered interlayer film (800 µm in thickness) was prepared.

### Preparation of Laminated glass A (for flexural rigidity measurement):

The interlayer film obtained was cut into a size of 20 cm in longitudinal length × 2.5 cm in transversal length. As a first lamination glass member and a second lamination glass member, two glass plates (clear glass, 20 cm in longitudinal length × 2.5 cm in transversal length) with respective thicknesses shown in Table 1 were prepared. The obtained interlayer film was sandwiched between the two glass plates to obtain a laminate. The obtained laminate was put into a rubber bag and the inside thereof was degassed for 20 minutes at a degree of vacuum of 2660 Pa (20 torr). Afterward, while keeping the laminate degassed, furthermore, the laminate was held in place for 30 minutes at 90°C and pressed under vacuum in an autoclave. The laminate thus preliminarily press-bonded was subjected to press-bonding for 20 minutes under conditions of 135°C and a pressure of 1.2 MPa (12 kg/cm²) in an autoclave to obtain a sheet of Laminated glass A.

### Preparation of Laminated glass B (for sound insulating properties measurement):

The interlayer film obtained was cut into a size of 30 cm in longitudinal length × 2.5 cm in transversal length. As a first lamination glass member and a second lamination glass member, two glass plates (clear glass, 30 cm in longitudinal length × 2.5 cm in transversal length) with respective thicknesses shown in Table 1 were prepared. The interlayer film was sandwiched between the two glass plates to obtain a laminate. The laminate was put into a rubber bag and degassed for 20 minutes at a degree of vacuum of 2.6 kPa, after which the laminate was transferred into an oven while being degassed, and furthermore, held in place for 30 minutes at 90°C and pressed under vacuum to subject the laminate to preliminary press-bonding. The preliminarily press-bonded laminate was subjected to press-bonding for 20 minutes under conditions of 135°C and a pressure of 1.2 MPa in an autoclave to obtain a sheet of Laminated glass B.

### (Examples 2 to 12 and Comparative Examples 1 to 6)

An interlayer film and a sheet of laminated glass were obtained in the same manner as that in Example 1 except that the kind of each of the resin and the plasticizer used for a composition for forming an interlayer film and the blending amount thereof were set to those listed in the following Tables 1 to 3, and the thicknesses of the interlayer film, the first lamination glass member and the second lamination glass member were set to those listed in the following Tables 1 to 3. Moreover, in Examples 2 to 12 and Comparative Examples 1 to 6, each of the ultraviolet ray screening agent and the oxidation inhibitor of the same kind as that in Example 1 was blended in the same blending amount (0.2 parts by weight relative to 100 parts by weight of the polyvinyl acetal resin) as that in Example 1.

### (Evaluation)

### (1) Shear storage elastic modulus

The shear storage elastic modulus was evaluated in the following manner.

Immediately after the interlayer film obtained was stored for 12 hours under an environment of a room temperature of 23±2°C and a humidity of 25±5%, the shear storage elastic modulus was measured by means of a dynamic viscoelasticity measuring apparatus "DMA+1000" available from Metravib. The interlayer film was cut into a size of 50 mm in length by 20 mm in width, and using the shear mode, the measurement was performed under the condition in which the temperature is increased from -50°C to 200°C at a temperature increasing rate of 2°C/minute and under the condition of a frequency of 0.5 Hz and a strain of 0.05%.

The temperature indicated by the smallest value of the shear storage elastic modulus in a temperature region of 10°C or more and 40°C or less (G' (10 to 40°C)) and the temperature indicated by the largest value thereof were determined. Moreover, the smallest value of the shear storage elastic modulus in a temperature region of 10°C or more and 40°C or less (G' (10 to 40°C)) and the largest value thereof were determined. Furthermore, a shear storage elastic modulus at 20°C (G' (20°C)) and a shear storage elastic modulus at -30°C (G' (-30°C)) were determined to calculate the ratio (G' (20°C)/G' (-30°C)).

### (2) Glass transition temperature Tg:

Immediately after the interlayer film obtained was stored for 12 hours under an environment of a room temperature of 23±2°C and a humidity of 25±5%, the shear storage elastic modulus was measured by means of a dynamic viscoelasticity measuring apparatus "DMA+1000" available from Metravib. The interlayer film was cut into a size of 50 mm in length by 20 mm in width, and using the shear mode, the measurement was performed under the condition in which the temperature is increased from -50°C to 200°C at a temperature increasing rate of 2°C/minute and under the condition of a frequency of 0.5 Hz and a strain of 0.05%. In the viscoelastic spectrum obtained, with regard to the loss tangent (tan δ), when a peak was observed within the range of -20°C to 0°C, the peak temperature was written in the column, and when a peak was not observed, "Not observed" was written in the column.

### (3) Largest value of tan δ in temperature region of - 20°C or more and 0°C or less

The largest value of tan δ in a temperature region of - 20°C or more and 0°C or less was determined. Specifically, immediately after the interlayer film obtained was stored for 12 hours under an environment of a room temperature of 23±2°C and a humidity of 25±5%, the shear storage elastic modulus was measured by means of a dynamic viscoelasticity measuring apparatus "DMA+1000" available from Metravib by means of a dynamic viscoelasticity measuring apparatus "DMA+1000" available from Metravib. The interlayer film was cut into a size of 50 mm in length by 20 mm in width, and using the shear mode, the measurement was performed under the condition in which the temperature is increased from -50°C to 200°C at a temperature increasing rate of 2°C/minute and under the condition of a frequency of 0.5 Hz and a strain of 0.05%. In the viscoelastic spectrum obtained, with regard to the loss tangent (tan δ), when a peak was observed within the range of -20°C to 0°C, the peak value (largest value) was written in the column.

### (4) Flexural rigidity

The sheet of Laminated glass A obtained was evaluated for the flexural rigidity.

The flexural rigidity was evaluated by the testing method schematically shown in Fig. 2. As a measuring apparatus, the UTA-500, which is available from ORIENTEC CORPORATION and equipped with the 3-point flexural test jig, was used. Under measurement conditions of the measurement temperature of 23°C (23°C±3°C) or 40°C (40°C±3°C), the distance D1 of 12 cm and the distance D2 of 20 cm, a sheet of laminated glass was deformed in the F direction at a displacement rate of 1 mm/minute, and the stress at the time when the deformation amount becomes 1.5 mm was measured to calculate the flexural rigidity. The flexural rigidity was judged according to the following criteria. The higher the numerical value of the flexural rigidity is, the more excellent in flexural rigidity the sheet of laminated glass is.

### [Criteria for judgment in flexural rigidity]

○○: 50 N/mm or more
○: 45 N/mm or more and less than 50 N/mm
×: Less than 45 N/mm

### (5) Sound insulating properties

The sheet of Laminated glass B obtained was excited by means of a vibration generator for a damping test ("Vibration exciter G21-005D" available from SHINKEN CO., LTD.) to obtain vibration characteristics, the vibration characteristics were amplified by a mechanical impedance measuring apparatus ("XG-81" available from RION Co., Ltd.), and the vibration spectrum was analyzed by an FFT spectrum analyzer ("FFT analyzer HP3582A" available from Yokogawa-Hewlett-Packard Company).

From the ratio of the loss factor thus obtained to the resonance frequency of Laminated glass B, a graph showing the relationship between the sound frequency (Hz) and the sound transmission loss (dB) at 20°C was prepared to determine the minimum sound transmission loss (TL value) at each of sound frequencies of about 3,000 Hz and about 4,000 Hz. The higher this TL value is, the higher in sound insulating properties the sheet of laminated glass is. The sound insulating properties were judged according to the following criteria.

[Criteria for judgment in sound insulating properties]
○○: The TL value is 35 dB or more.
○: The TL value is 30 dB or more and less than 35 dB.
×: The TL value is less than 30 dB.

### (6) Evaluation after recycling

Pieces of an interlayer film which were generated in a production process of the interlayer film and became unnecessary were recovered. The recovered pieces of the film were used as the raw material to produce an interlayer film with an extruder. The interlayer film obtained was used to be evaluated for the flexural rigidity and sound insulating properties after recycling in the same manner as that for each of Evaluations (4) and (5) mentioned above.

The details and the results are shown in the following

Tables 1 to 3. In this connection, in the following Tables 1 to 3, the description of ingredients to be blended other than the thermoplastic resin, the plasticizer and the silica particle which is an additive was omitted.

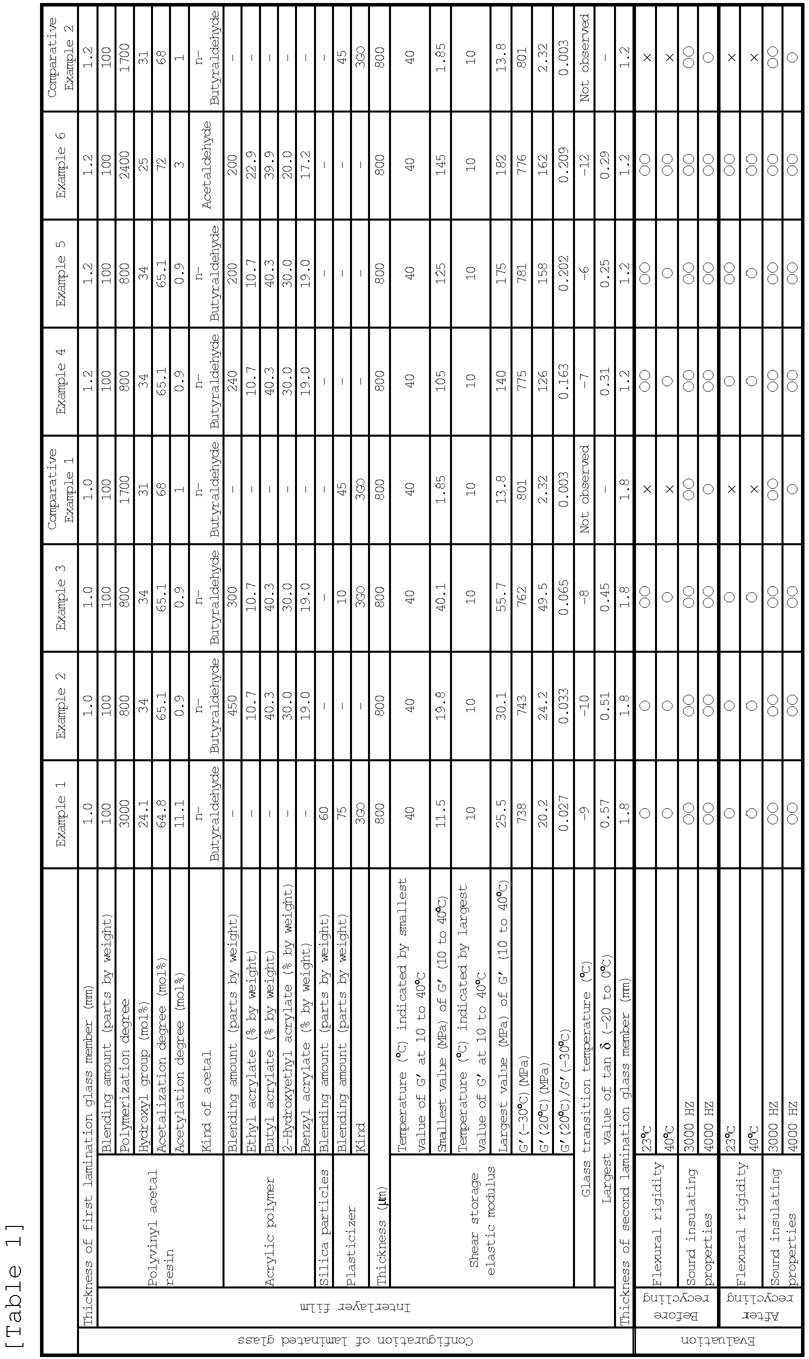

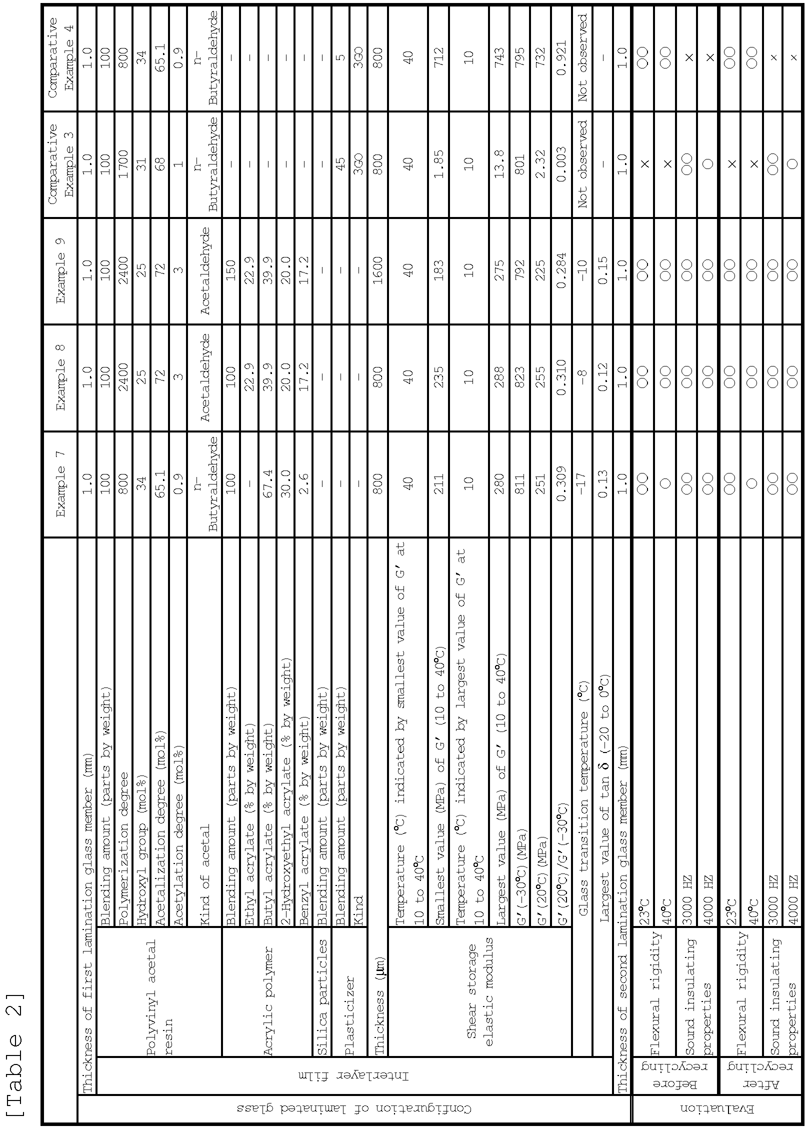

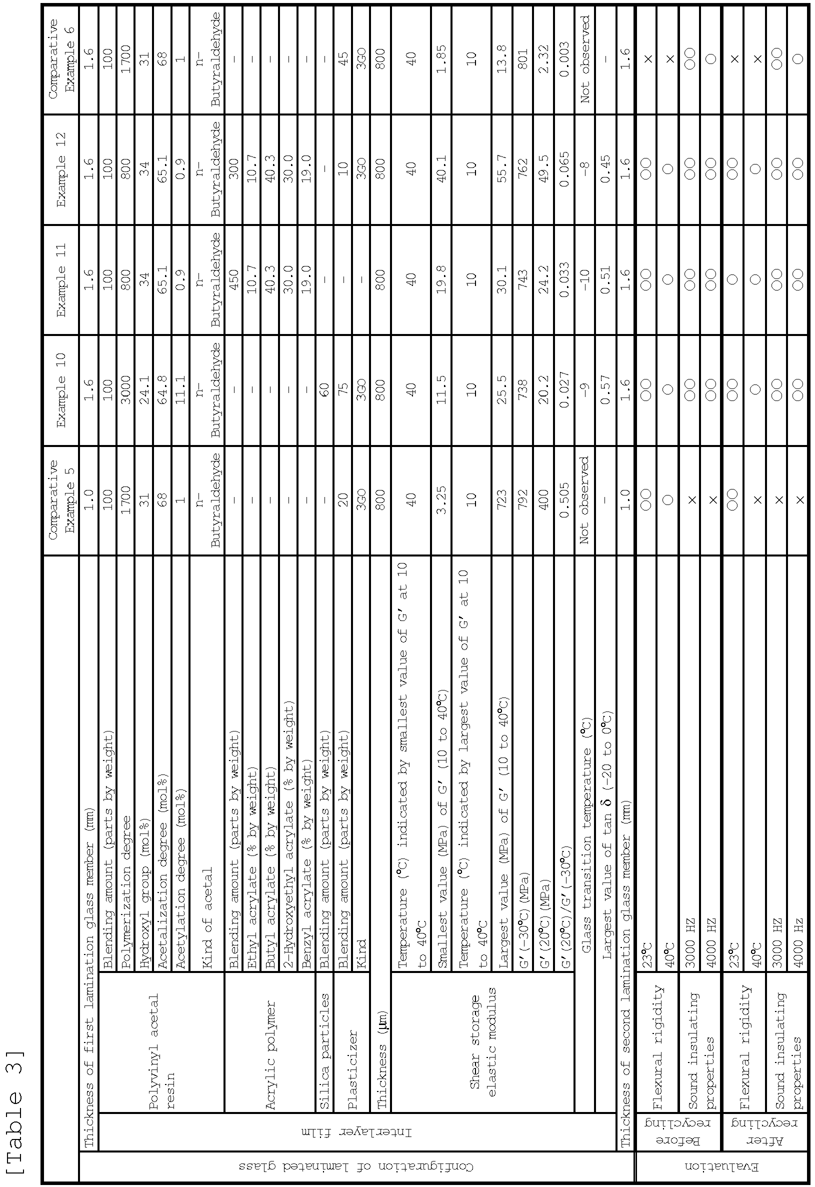

A single-layered interlayer film can be used as a recyclable material for an interlayer film. In examples, since each interlayer film is a single-layered interlayer film, the interlayer film was recyclable.

### EXPLANATION OF SYMBOLS

11: Interlayer film (single-layer, first layer)
11a : First surface
11b : Second surface
21: First lamination glass member
31: Laminated glass

## Claims

1. An interlayer film for laminated glass being a single-layered interlayer film, comprising a thermoplastic resin, and
having a smallest value of the shear storage elastic modulus in a temperature region of 10°C or more and 40°C or less measured at a frequency of 0.5 Hz of 3 MPa or more,
a ratio of a shear storage elastic modulus at 20°C measured at a frequency of 0.5 Hz to a shear storage elastic modulus at -30°C measured at a frequency of 0.5 Hz of 0.01 or more and 0.8 or less, a glass transition temperature falling within the range of -20°C or more and 0°C or less, and a largest value of tan δ in a temperature region of -20°C or more and 0°C or less of 0.1 or more.

2. The interlayer film for laminated glass according to claim 1, wherein the thermoplastic resin contains a polyvinyl acetal resin.

3. The interlayer film for laminated glass according to claim 2, wherein the content of the polyvinyl acetal resin is 20% by weight or more in 100% by weight of the whole thermoplastic resin.

4. The interlayer film for laminated glass according to claim 2 or 3, wherein the polyvinyl acetal resin is a polyvinyl acetoacetal resin or a polyvinyl butyral resin.

5. The interlayer film for laminated glass according to any one of claims 1 to 4, having a largest value of the shear storage elastic modulus in a temperature region of 10°C or more and 40°C or less measured at a frequency of 0.5 Hz of 500 MPa or less.

6. The interlayer film for laminated glass according to any one of claims 1 to 5, wherein the thermoplastic resin contains a thermoplastic resin other than the polyvinyl acetal resin.

7. The interlayer film for laminated glass according to claim 6, wherein the content of the thermoplastic resin other than the polyvinyl acetal resin is 15% by weight or more in 100% by weight of the whole thermoplastic resin.

8. The interlayer film for laminated glass according to claim 6 or 7, wherein the thermoplastic resin other than the thermoplastic resin is an acrylic polymer.

9. The interlayer film for laminated glass according to any one of claims 1 to 8, having a thickness of 3 mm or less.

10. The interlayer film for laminated glass according to any one of claims 1 to 9, being used together with a first glass plate having a thickness of 1.6 mm or less and being arranged between the first glass plate and a second glass plate and being used for obtaining laminated glass.

11. The interlayer film for laminated glass according to any one of claims 1 to 10, being arranged between a first glass plate and a second glass plate and being used for obtaining laminated glass,
wherein the sum of the thickness of the first glass plate and the thickness of the second glass plate is 3.5 mm or less.

12. Laminated glass, comprising:
a first lamination glass member;
a second lamination glass member; and
the interlayer film for laminated glass according to any one of claims 1 to 9,
the interlayer film for laminated glass being arranged between the first lamination glass member and the second lamination glass member.

13. The laminated glass according to claim 12, wherein
the first lamination glass member is a first glass plate, and
the thickness of the first glass plate is 1.6 mm or less.

14. The laminated glass according to claim 12 or 13, wherein
the first lamination glass member is a first glass plate,
the second lamination glass member is a second glass plate, and
the sum of the thickness of the first glass plate and the thickness of the second glass plate is 3.5 mm or less.
